# EUROPÄISCHE PATENTANMELDUNG

(11) **EP 4 686 810 A1**
(43) Veröffentlichungstag der Anmeldung: **04.02.2026**
(21) Anmeldenummer: 25184616.8
(22) Anmeldetag: 23.06.2025
(51) Int. Cl.: F01D 15/10, B64C 11/14, F02C 7/04

(54) **GASTURBINENBAUGRUPPE, FLUGTRIEBWERK UND VERFAHREN ZUM HERSTELLEN, WARTEN UND BETREIBEN EINER GASTURBINENBAUGRUPPE**

(30) Priorität: 02.08.2024 DE 102024122086
(71) Anmelder: MTU Aero Engines AG, 80995 München (DE)
(72) Erfinder: Herzog, Tobias, 80995 München (DE)

(57) **Zusammenfassung**

Die vorliegende Erfindung betrifft eine Gasturbinenbaugruppe, insbesondere Gasturbine und/oder für ein Flugtriebwerk, wobei die Gasturbinenbaugruppe einen Gehäuse-Stator (1), eine Verdichterwelle (2) mit einer Rotationsachse (R) und einen elektrischen Generator aufweist, wobei ein Generator-Stator (31) des Generators mit dem Gehäuse-Stator verbunden oder integral ausgebildet ist, ein Generator-Rotor (32) des Generators mit der Verdichterwelle gekoppelt oder integral ausgebildet ist, und der Generator wenigstens teilweise in einer an dem Gehäuse-Stator angeordneten Nasenhaube (11) aufgenommen ist. Die Erfindung betrifft außerdem ein Flugtriebwerk und ein Verfahren zum Herstellen, Warten und/oder Betreiben der Gasturbinenbaugruppe.

## Beschreibung

Die vorliegende Erfindung betrifft eine Gasturbinenbaugruppe, in einer Ausführung eine Gasturbine und/oder eine Gasturbinenbaugruppe für ein Flugtriebwerk, insbesondere also eine Gasturbine für ein Flugtriebwerk, ein Flugtriebwerk mit der Gasturbine(nbaugruppe) sowie ein Verfahren zum Herstellen, Warten und/oder Betreiben der Gasturbine(nbaugruppe).

Nach betriebsinterner Praxis ist ein elektrischer Generator (axial) in Inneren einer Gasturbine platziert und wird von einer Welle der Gasturbine angetrieben. Dadurch kann vorteilhaft in der Gasturbine (elektrische) Energie (rück)gewonnen werden.

Andererseits existieren Gasturbinen, die eine einlaufseitige Nasenhaube aufweisen, welche eine geschlossene axiale Stirnseite aufweist und axial vor bzw. stromaufwärts einer vordersten bzw. stromaufwärtigsten von der Gasturbine antreibbaren Laufschaufel, beispielsweise einem (gegebenenfalls vordersten bzw. stromaufwärtigsten) Fan, angeordnet ist. Dabei kann es sich insbesondere um mit dieser Laufschaufel mitdrehende Spinner oder stationäre bzw. gehäusefeste Nasenhauben handeln.

Eine Aufgabe einer Ausführung der vorliegenden Erfindung ist es, eine Gasturbinenbaugruppe, insbesondere eine Gasturbine und/oder für ein Flugtriebwerk, und/oder ein Herstellen, Warten und/oder Betreiben einer Gasturbine bzw. Gasturbinenbaugruppe zu verbessern.

Diese Aufgabe wird durch eine Gasturbinenbaugruppe mit den Merkmalen des Anspruchs 1 bzw. ein Verfahren mit den Merkmalen des Anspruchs 9 gelöst. Anspruch 8 stellt ein Flugtriebwerk, das eine hier beschriebene Gasturbine(nbaugruppe) aufweist, unter Schutz. Die Unteransprüche betreffen vorteilhafte Weiterbildungen.

Nach einer Ausführung der vorliegenden Erfindung weist eine Gasturbinenbaugruppe
- einen Gehäuse-Stator;
- eine Verdichterwelle mit einer Rotationsachse; und
- einen elektrischen Generator
auf.

In einer Ausführung ist die Gasturbinenbaugruppe eine Gasturbine, in einer Weiterbildung mit einer oder mehreren Verdichterstufen, wenigstens einer, vorzugsweise axial (in Durchströmungsrichtung der Gasturbine (gesehen)) stromabwärts von den Verdichterstufen angeordnete, Brennkammer und einer oder mehreren, vorzugsweise axial (in Durchströmungsrichtung der Gasturbine (gesehen)) stromabwärts von der Brennkammer angeordnete, Turbinenstufen auf, entsprechend wird vorliegend teilweise auch von einer Gasturbine(nbaugruppe) gesprochen. Zusätzlich oder alternativ ist in einer Ausführung die Gasturbine(nbaugruppe) eine Gasturbine(nbaugruppe) für ein Flugtriebwerk, vorzugsweise eine Gasturbine(nbaugruppe) eines Flugtriebwerk. Hierfür ist die vorliegende Erfindung, insbesondere aufgrund der Betriebsbedingungen und Bauraumrestriktionen, besonders vorteilhaft.

Der Gehäuse-Stator weist in einer Ausführung eine oder mehrere Leitschaufeln und/oder Radialstreben auf. Dadurch kann in einer Ausführung eine Strömung in die Gasturbine und/oder eine Stabilität verbessert werden.

Nach einer Ausführung der vorliegenden Erfindung ist ein Stator des Generators ("Generator-Stator") mit dem Gehäuse-Stator verbunden oder integral ausgebildet und ein Rotor des Generators ("Generator-Rotor") mit der Verdichterwelle gekoppelt, vorzugsweise drehfest und/oder wenigstens temporär und/oder direkt oder indirekt verbunden, oder integral ausgebildet. Dadurch kann eine Rotation der Verdichterwelle um ihre Rotationsachse relativ zu dem Gehäuse-Stator den Generator-Rotor relativ zu dem Generator-Stator drehen, so dass der Generator wenigstens temporär elektrischen Strom liefert. Dadurch kann vorteilhaft (elektrische) Energie (rück)gewonnen werden. In einer Ausführung ist eine Rotationsachse des Generator-Rotors (um die dieser relativ zum Generator-Stator dreht bzw. entsprechend gelagert ist) parallel zur Rotationsachse der Verdichterwelle und/oder einer bzw. der (Haupt)Maschinenachse der Gasturbine, in einer Weiterbildung mit dieser (Haupt)Maschinenachse identisch.

Nach einer Ausführung der vorliegenden Erfindung weist die Gasturbinenbaugruppe eine Nasenhaube auf, die an dem Gehäuse-Stator angeordnet ist. In einer Ausführung ist die Nasenhaube Gehäuse-Stator-fest bzw. axial und/oder drehfest an dem Gehäuse-Stator angeordnet bzw. ein(e) statische(s) bzw. gasturbinengehäusefeste(s) Nasenhaube bzw. ein- oder mehrteiliges Element bzw. Bauteil.

In einer Ausführung weist die Nasenhaube eine geschlossene, vorzugsweise (in Durchströmungsrichtung der Gasturbine (gesehen)) vordere bzw. stromaufwärtige, axiale Stirnseite auf. Zusätzlich oder alternativ ist die Nasenhaube nach einer Ausführung axial ganz oder teilweise vor einer vordersten bzw. (in Durchströmungsrichtung der Gasturbine (gesehen)) stromaufwärtigsten (der) Laufschaufel(n) der Gasturbine bzw. von der Gasturbine antreibbare(n) Laufschaufel(en) angeordnet. Diese Laufschaufel kann in einer Ausführung eine Laufschaufel eines (gegebenfalls vordersten bzw. stromaufwärtigsten) Fans der Gasturbine(nbaugruppe) bzw. des (Mantel- bzw. Nebenstrom- bzw. Fan-)Flugtriebwerks ("Turbofan") oder eine Laufschaufel einer vordersten bzw. stromaufwärtigsten (Niederdruck)Verdichterstufe der (dann fanlosen) Gasturbine(nbaugruppe) sein. Eine solche Nasenhaube sorgt in einer Ausführung für eine bessere Strömung in die Gasturbine. "Axial" bezieht sich vorliegend insbesondere auf die Rotationsachse der Verdichterwelle und/oder (Haupt)Maschinenachse der Gasturbine, "radial" insbesondere auf eine Richtung senkrecht zu dieser Achse und einer Rotations- bzw. Umfangsrichtung um diese Achse, vorzugsweise von dieser Achse weg.

Einer Ausführung der vorliegenden Erfindung liegt die Erkenntnis, dass solche (statischen) Nasenhauben ungenutzten (Innen)raum und/oder eine vorteilhafte Zugänglichkeit und/oder vorteilhafte thermische Bedingungen, aufweisen, und die Idee zugrunde, diesen Nasenhaubeninnenraum zur Unterbringung wenigstens eines elektrischen Generators zu nutzen.

Entsprechend ist bzw. wird nach einer Ausführung der vorliegenden Erfindung der Generator ganz oder teilweise in (einem Innenraum) der Nasenhaube aufgenommen, ragt vorzugsweise axial in einen Innenraum der Nasenhaube hinein oder ist axial in diesem angeordnet. In einer Ausführung ist dieser Generator axial ganz oder teilweise vor einer bzw. der vordersten bzw. (in Durchströmungsrichtung der Gasturbine (gesehen)) stromaufwärtigsten (der) Laufschaufel(n) der Gasturbine bzw. von der Gasturbine antreibbare(n) Laufschaufel(en) angeordnet. Allgemein können mehrere Laufschaufeln axial in einer Ebene angeordnet sein, so dass jede dieser Laufschaufeln eine vordersten bzw. stromaufwärtigste (der) Laufschaufel(n) der Gasturbine sein bzw. die Gasturbine mehrere vorderste bzw. stromaufwärtigste Laufschaufeln aufweisen kann.

Durch die Erfindung kann in einer Ausführung bisher ungenutzter Raum vorteilhaft genutzt und dadurch die Gasturbine vorteilhaft leichter und/oder kompakter bauen bzw. bisher für Generatoren im Inneren der Gasturbine benötigter Raum anderweitig genutzt oder eingespart werden. Zusätzlich oder alternativ kann durch die vollständige oder teilweise Aufnahme des Generators in (dem Innenraum) der Nasenhaube eine Zugänglichkeit und so insbesondere die Herstellung bzw. Montage und/oder Wartung der Gasturbine(nbaugruppe) verbessert werden, wobei eine Wartung insbesondere eine Inspektion und/oder Reparatur umfassen, insbesondere sein, kann. Zusätzlich oder alternativ können durch die vollständige oder teilweise Aufnahme des Generators in (dem Innenraum) der Nasenhaube thermisch vorteilhafte Randbedingungen für den Generator genutzt bzw. geschaffen werden.

In einer Ausführung ist die Verdichterwelle mit der (vordersten bzw. stromaufwärtigsten von der Gasturbine antreibbaren) Laufschaufel, in einer Weiterbildung direkt oder indirekt, gekoppelt oder integral ausgebildet bzw. ist bzw. wird diese Laufschaufel von bzw. mit der Verdichterwelle dreh- bzw. antreibbar bzw. (im Betrieb der Gasturbine wenigstens temporär) gedreht bzw. angetrieben.

Zusätzlich oder alternativ ist die Verdichterwelle in einer Ausführung mit einer hintersten bzw. (in Durchströmungsrichtung der Gasturbine (gesehen)) stromabwärtigsten Turbinenstufe der Gasturbine, in einer Weiterbildung einer Niederdruckturbine der Gasturbine, direkt oder indirekt, gekoppelt oder integral ausgebildet bzw. ist bzw. wird diese Verdichterwelle von bzw. mit dieser (Niederdruck)Turbine(nstufe) dreh- bzw. antreibbar bzw. (im Betrieb der Gasturbine wenigstens temporär) gedreht bzw. angetrieben. Entsprechend ist die Verdichterwelle in einer besonders bevorzugten Ausführung eine Niederdruckverdichterwelle, wobei die Gasturbine(nbaugruppe) in einer Weiterbildung eine weitere bzw. Hochdruckverdichterwelle aufweist, die mit einer vordersten bzw. (in Durchströmungsrichtung der Gasturbine (gesehen)) stromaufwärtigsten Turbinenstufe der Gasturbine, in einer Weiterbildung einer Hochdruckturbine der Gasturbine, direkt oder indirekt, gekoppelt oder integral ausgebildet ist bzw. wird bzw. von bzw. mit dieser (weiteren bzw. Hochdruck)Turbine(nstufe) dreh- bzw. antreibbar bzw. (im Betrieb der Gasturbine wenigstens temporär) gedreht bzw. angetrieben ist bzw. wird, wobei in einer Ausführung dieser Weiterbildung die (Niederdruck)Verdichterwelle, mit der der Generator-Rotor gekoppelt oder integral ausgebildet ist, durch diese weitere bzw. Hochdruckverdichterwelle (axial) hindurchgeführt ist.

Hierdurch kann der Generator jeweils, insbesondere in Kombination, besonders vorteilhaft betrieben werden, insbesondere mit einer günstige(re)n Drehzahl.

In einer Ausführung ist die Nasenhaube, vorzugsweise ihre geschlossene axiale Stirnseite, konusartig bzw. in Durchströmungsrichtung der Gasturbine divergent (ausgebildet). Dadurch kann in einer Ausführung eine Strömung in die Gasturbine verbessert werden.

Zusätzlich oder alternativ ist bzw. wird in einer Ausführung die Nasenhaube lösbar an dem Gehäuse-Stator angeordnet bzw. befestigt, in einer Ausführung reib- und/oder formschlüssig, insbesondere mittels Schrauben, Klemmen, oder dergleichen. Dadurch kann in einer Ausführung die Herstellung bzw. Montage und/oder Wartung der Gasturbine(nbaugruppe), insbesondere des Generators, verbessert werden.

In einer anderen Ausführung ist die Nasenhaube unlösbar an dem Gehäuse-Stator angeordnet, in einer Weiterbildung mit dem Gehäuse-Stator stoffschlüssig verbunden oder integral ausgebildet. Dadurch kann in einer Ausführung die Festigkeit und/oder Stabilität verbessert werden.

In einer Ausführung ist bzw. wird der Generator-Rotor lösbar mit der Verdichterwelle gekoppelt, in einer Ausführung reib- und/oder formschlüssig, insbesondere mittels Schrauben, Klemmen, oder dergleichen. Zusätzlich oder alternativ ist bzw. wird in einer Ausführung der Generator-Stator lösbar mit dem Gehäuse-Stator verbunden, in einer Ausführung reib- und/oder formschlüssig, insbesondere mittels Schrauben, Klemmen, oder dergleichen.

Dadurch kann in einer Ausführung jeweils, insbesondere in Kombination, die Herstellung bzw. Montage und/oder Wartung der Gasturbine(nbaugruppe) verbessert werden.

In einer Ausführung ist der Generator-Rotor unlösbar mit der Verdichterwelle gekoppelt, in einer Weiterbildung mit der Verdichterwelle stoffschlüssig verbunden, oder integral ausgebildet. Zusätzlich oder alternativ ist in einer Ausführung der Generator-Stator unlösbar mit dem Gehäuse-Stator verbunden, in einer Weiterbildung mit dem Gehäuse-Stator stoffschlüssig verbunden, oder integral ausgebildet. Dadurch kann in einer Ausführung jeweils, insbesondere in Kombination, die Festigkeit und/oder Stabilität verbessert werden.

In einer Ausführung weist die Gasturbinenbaugruppe eine Lageranordnung auf, durch die die (mit dem Generator-Rotor gekoppelte oder integral ausgebildete) Verdichterwelle, vorzugsweise um ihre Rotationsachse drehbar, gelagert ist.

In einer Weiterbildung ist diese Verdichterwelle mittels dieser Lageranordnung an dem Gehäuse-Stator gelagert bzw. beweglich, insbesondere drehbar, abgestützt. Zusätzlich oder alternativ ist in einer Weiterbildung der Generator-Rotor axial vor bzw. stromaufwärts von dieser Lageranordnung, vorzugsweise vor bzw. stromaufwärts von einer bzw. der vordersten bzw. (in Durchströmungsrichtung der Gasturbine (gesehen)) stromaufwärtigsten Lageranordnung zur Lagerung dieser Verdichterwelle, angeordnet. Zusätzlich oder alternativ stützt sich in einer Weiterbildung der Generator radial beidseits der Lageranordnung ab, in einer Ausführung der Generator-Stator radial außerhalb von der Lageranordnung und/oder der Generator-Rotor radial innerhalb von der Lageranordnung. Dadurch kann in einer Ausführung jeweils, insbesondere in Kombination, die Festigkeit und/oder Stabilität verbessert werden.

In einer Ausführung weist die Gasturbinenbaugruppe wenigstens eine elektrische Leitung auf, durch die wenigstens temporär elektrischer Strom von dem Generator, in einer Weiterbildung zu wenigstens einem Verbraucher und/oder wenigstens einem Energiespeicher, abgeführt wird bzw. die hierzu eingerichtet ist bzw. verwendet wird, wobei diese elektrische(n) Leitung(en) teilweise in dem Gehäuse-Stator angeordnet ist bzw. sind.

Zusätzlich oder alternativ weist die Gasturbinenbaugruppe in einer Ausführung wenigstens eine Signalleitung auf, durch die wenigstens temporär Signale, vorzugsweise Mess- und/oder Steuersignale, von dem Generator und/oder an den Generator übertragen werden bzw. die hierzu eingerichtet ist bzw. verwendet wird, wobei diese Signalleitung(en) teilweise in dem Gehäuse-Stator angeordnet ist bzw. sind.

Zusätzlich oder alternativ weist die Gasturbinenbaugruppe in einer Ausführung wenigstens eine Fluidleitung auf, durch die wenigstens temporär Fluid, vorzugsweise Kühl- und/oder Schmiermittel oder dergleichen, (zu) dem Generator zugeführt und/oder von dem Generator abgeführt wird bzw. die hierzu eingerichtet ist bzw. verwendet wird, wobei diese Fluidleitung(en) teilweise in dem Gehäuse-Stator angeordnet ist bzw. sind.

Dadurch kann die Gasturbine vorteilhaft kompakter bauen und/oder die entsprechende(n) Leitung(en) geschützt werden.

Nach einer Ausführung der vorliegenden Erfindung wird zum Herstellen einer hier beschriebenen Gasturbinenbaugruppe der Generator wenigstens teilweise in der Nasenhaube aufgenommen, in einer Weiterbildung, indem der Generator wenigstens teilweise in die, vorzugsweise bereits an dem Gehäuse-Stator angeordnete, Nasenhaube eingeführt oder die Nasenhaube wenigstens teilweise über den, vorzugsweise bereits an dem Gehäuse-Stator bzw. der Verdichterwelle angeordneten, Generator geschoben wird. Hierdurch kann jeweils die Herstellung, insbesondere Montage, verbessert werden.

Nach einer Ausführung der vorliegenden Erfindung wird zum Warten einer hier beschriebenen Gasturbinenbaugruppe die Nasenhaube zur Wartung temporär von dem Gehäuse-Stator getrennt.

Nach einer Ausführung der vorliegenden Erfindung versorgt beim Betreiben einer hier beschriebenen Gasturbinenbaugruppe der Generator, der durch die Verdichterwelle angetrieben wird, wenigstens temporär elektrischen Strom an wenigstens einen, vorzugsweise außerhalb der Gasturbinenbaugruppe angeordneten, Verbraucher und/oder an wenigstens einen, vorzugsweise außerhalb der Gasturbinenbaugruppe angeordneten, Energiespeicher.

Dadurch kann in einer Ausführung Herstellen, Warten und/oder Betreiben der Gasturbinenbaugruppe verbessert, insbesondere das Herstellen und/oder Warten vereinfacht und/oder beschleunigt und/oder der bzw. die Verbraucher Energiespeicher vorteilhaft mit elektrischem Strom versorgt, werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

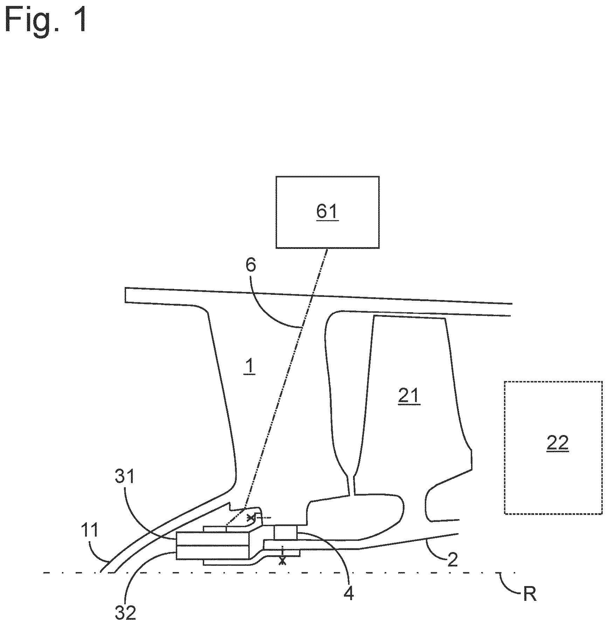

- Fig. 1: eine Gasturbinenbaugruppe nach einer Ausführung der vorliegenden Erfindung.

Fig. 1 zeigt eine Gasturbinenbaugruppe nach einer Ausführung der vorliegenden Erfindung in einem Längsschnitt.

Die Gasturbinenbaugruppe weist ein (in Fig. 1 nur teilweise dargestelltes) Gehäuse-Stator 1, eine (in Fig. 1 nur teilweise dargestellte) Niederdruckverdichterwelle 2 mit einer Rotationsachse R und einen elektrischen Generator mit einem Generator-Stator 31, der mit dem Gehäuse-Stator 1 verbunden ist, einem Generator-Rotor 32, der mit der Niederdruckverdichterwelle 2 gekoppelt ist, und einer mit der Rotationsachse R der Niederdruckverdichterwelle 2 fluchtende bzw. identische Rotationsachse auf.

Der Generator ist teilweise in einer an dem Gehäuse-Stator 1 angeordneten, konusartigen Nasenhaube 11 aufgenommen, die eine geschlossene axiale Stirnseite (links in Fig. 1) aufweist. Der Generator und die Nasenhaube sind in der gezeigten Ausführungsform axial vor einer vordersten von der Gasturbine antreibbaren Laufschaufel 21 angeordnet.

Die Niederdruckverdichterwelle 2 ist mit dieser Laufschaufel 21 und einer hintersten Turbinenstufe 22 gekoppelt, die in Fig. 1 gestrichelt angedeutet ist.

Die Nasenhaube 11 kann insbesondere lösbar an dem Gehäuse-Stator 1 angeordnet sein (nicht dargestellt).

Der Generator-Rotor 32 ist lösbar mit der Verdichterwelle 2 gekoppelt, der Generator-Stator 31 lösbar mit dem Gehäuse-Stator 1 verbunden.

Die Gasturbinenbaugruppe weist eine Lager(anordn)ung 4 zur Lagerung der Niederdruckverdichterwelle 2 an dem Gehäuse-Stator 1 auf. Der Generator ist axial vor dieser Lageranordnung angeordnet und stützt sich radial beidseits der Lager(anordn)ung 4 ab, indem der Generator-Stator 31 sich radial außerhalb von der Lager(anordn)ung 4 an dem Gehäuse-Stator 1 und der Generator-Rotor 32 sich radial innerhalb von der Lager(anordn)ung 4 abstützt.

Die Gasturbinenbaugruppe weist eine Leitungsanordnung 6 mit wenigstens einer elektrischen Leitung und/oder wenigstens einer Signalleitung und/oder wenigstens einer Fluidleitung auf. Entsprechend kann eine Anordnung 61 gleichermaßen insbesondere wenigstens einen elektrischen Verbraucher, wenigstens einen Energiespeicher, wenigstens eine Fluidquelle, wenigstens eine Fluidsenke und/oder eine Datenverarbeitungseinrichtung zum Senden und/oder Empfangen von Signalen an den bzw. von dem Generator aufweisen.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf'. Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Gehäuse-Stator
- 2: Niederdruckverdichterwelle
- 4: Lager
- 6: Leitungsanordnung
- 11: Nasenhaube
- 21: vorderste Laufschaufel
- 22: hintersten Turbinenstufe
- 31: Generator-Stator
- 32: Generator-Rotor
- 61: Anordnung

- R: Rotationsachse

## Patentansprüche

1. Gasturbinenbaugruppe, insbesondere Gasturbine und/oder für ein Flugtriebwerk, wobei die Gasturbinenbaugruppe einen Gehäuse-Stator (1), eine Verdichterwelle (2) mit einer Rotationsachse (R) und einen elektrischen Generator aufweist, wobei ein Generator-Stator (31) des Generators mit dem Gehäuse-Stator verbunden oder integral ausgebildet ist, ein Generator-Rotor (32) des Generators mit der Verdichterwelle gekoppelt oder integral ausgebildet ist, und der Generator wenigstens teilweise in einer an dem Gehäuse-Stator angeordneten Nasenhaube (11) aufgenommen ist.

2. Gasturbinenbaugruppe nach Anspruch 1, **dadurch gekennzeichnet, dass** die Nasenhaube eine geschlossene axiale Stirnseite aufweist und/oder der Generator und/oder die Nasenhaube axial wenigstens teilweise vor einer vordersten Laufschaufel (21) der Gasturbine angeordnet ist.

3. Gasturbinenbaugruppe nach einem der vorhergehenden Ansprüche, **dadurch gekennzeichnet, dass** die Verdichterwelle mit einer vordersten Laufschaufel (21) der Gasturbine und/oder einer hintersten Turbinenstufe (22) der Gasturbine gekoppelt oder integral ausgebildet, insbesondere eine Niederdruckverdichterwelle, ist.

4. Gasturbinenbaugruppe nach einem der vorhergehenden Ansprüche, **dadurch gekennzeichnet, dass** die Nasenhaube konusartig ist und/oder lösbar an dem Gehäuse-Stator angeordnet ist.

5. Gasturbinenbaugruppe nach einem der vorhergehenden Ansprüche, **dadurch gekennzeichnet, dass** der Generator-Rotor lösbar mit der Verdichterwelle gekoppelt ist und/oder der Generator-Stator lösbar mit dem Gehäuse-Stator verbunden ist.

6. Gasturbinenbaugruppe nach einem der vorhergehenden Ansprüche, **gekennzeichnet durch** eine Lageranordnung (4) zur Lagerung der Verdichterwelle, wobei die Verdichterwelle mittels dieser Lageranordnung an dem Gehäuse-Stator gelagert ist und/oder der Generator axial vor dieser Lageranordnung angeordnet ist und/oder sich radial beidseits dieser Lageranordnung abstützt.

7. Gasturbinenbaugruppe nach einem der vorhergehenden Ansprüche, **gekennzeichnet durch** eine Leitungsanordnung (6) mit wenigstens einer elektrischen Leitung zum Abführen von elektrischem Strom von dem Generator und/oder wenigstens einer Signalleitung zur Übertragung von Signalen von dem und/oder an den Generator und/oder wenigstens einer Fluidleitung zur Zu- und/oder Abfuhr von Fluid zu bzw. von dem Generator, wobei die Leitungsanordnung wenigstens teilweise in dem Gehäuse-Stator angeordnet ist.

8. Flugtriebwerk aufweisend eine Gasturbinenbaugruppe nach einem der vorhergehenden Ansprüche.

9. Verfahren zum Herstellen, Warten und/oder Betreiben einer Gasturbinenbaugruppe nach einem der vorhergehenden Ansprüche, **dadurch gekennzeichnet, dass** der Generator wenigstens teilweise in der Nasenhaube (11) aufgenommen wird und/oder die Nasenhaube (11) zur Wartung temporär von dem Gehäuse-Stator getrennt wird und/oder der durch die Verdichterwelle (2) angetriebene Generator elektrischen Strom an wenigstens einen Verbraucher und/oder an wenigstens einen Energiespeicher liefert.
